# Europäisches Patentamt

# European Patent Office

# Office européen des brevets

(11) Publication number: **0 158 354**
**B1**

(12) **EUROPEAN PATENT SPECIFICATION**

(45) Date of publication of patent specification: **28.12.88**

(51) Int. Cl.⁴: **B 60 R 25/02, E 05 B 49/00**

(21) Application number: **85104400.8**

(22) Date of filing: **11.04.85**

(54) **Keyless entry system for automotive devices with compact, portable wireles code transmitter, and feature for preventing users from locking transmitter in vehicle.**

(30) Priority: **12.04.84 JP 73697/84**

(43) Date of publication of application:
**16.10.85 Bulletin 85/42**

(45) Publication of the grant of the patent:
**28.12.88 Bulletin 88/52**

(84) Designated Contracting States:
**DE FR GB**

(56) References cited:
**EP-A-0 073 068**
**EP-A-0 088 490**
**WO-A-80/01477**
**DE-A-3 137 260**
**JP-A-59 024 075**
**US-A-4 205 325**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Mochida, Haruo**
**1104-41, Susugaya Kiyokawa-mura**
**Aiko-gun Kanagawa-ken (JP)**

(74) Representative: **Patentanwälte TER MEER -**
**MÜLLER - STEINMEISTER**
**Mauerkircherstrasse 45**
**D-8000 München 80 (DE)**

EP 0 158 354 B1

Courier Press, Leamington Spa, England.

## Description

Background of the invention

The present invention relates generally to a keyless entry system for operating automotive vehicle devices such as door locks, a trunk lid lock, a glove box lid lock, a steering column lock and/or a starter motor, without using any mechanical keys, such as ignition key. More specifically, the invention relates to a keyless entry system which includes a compact, pocket-portable wireless code transmitter of a size comparable to a credit card, and a feature for preventing the transmitter from being locked in the vehicle.

Conventionally, automotive door locks, trunk lid locks, glove box lid locks, steering lock devices and so forth have been operated by means of ignition or other mechanical keys. Recently, so-called "Keyless Entry Systems", which do not require keys to operate door locks, trunk locks, vehicle window regulators and so forth, have been developed. In such keyless entry systems, a keyboard is provided on the external surface of the vehicle body to allow entry of a preset code authorizing access to one of more desired vehicle devices. The designated vehicle devices are electrically operated when the entered code matches a preset code.

U.S. Patent 4,205,325, to Haygood et al, discloses a keyless entry system for an automotive vehicle permitting a plurality of operations to be achieved from outside of the vehicle by one who is knowledgeable of preset digital codes. Functions such as unlocking the vehicle doors, opening the trunk lid, opening windows, operating the sunroof or programming the system with a user-preferred digital access code can all be performed by proper sequential operation of a digital keyboard mounted on the outside of the vehicle.

This and other conventional keyless entry systems require the user to accurately input the preset code through the keyboard. Although such keyless entry systems have been well developed and considered useful for eliminating the need for mechanical keys, a serious problem may occur when the user of the vehicle forgets the preset code. If the user is outside of the vehicle and the vehicle door lock device is holding the door locked, the user cannot unlock the door lock until he remembers the preset code.

In order to resolve this defect in the prior art and allow convenient use of the keyless entry system, there has been proposed a new approach in which a pocket-portable wireless transmitter, of a size comparable to a credit card and thus capable of being carried in clothing pockets, is used to identify users authorized to operate vehicle devices. This new keyless entry system has been disclosed in the Published Japanese Patent Application (Tokkai) Showa 59-24075, published on February 7, 1984, (Japanese Patent Application No. 57-132118, filed on July 30, 1972). In the disclosed system, door locks, a trunk lid lock and so forth can be operated with a single push-button action. The wireless transmitter always becomes active in response to operation or depression of any one of the push buttons to operate to desired vehicle device. This means that whoever possesses the transmitter has full access to the vehicle and that whenever the transmitter is near enough to the vehicle, keyless entry is possible for any one at all. As a result, if the user should lock the transmitter in the vehicle and leave the vehicle, anyone would be able to unlock the door, turn on the starter motor and steal the vehicle. In addition, it would be highly likely for items stored in the trunk and/or glove box to be stolen when transmitter is left in the vehicle.

In the prior system, it is still required at least one stroke of push button operation for operating each vehicle device. For instance, each one stroke of push button operation is required for performing door locking, unlocking, steering locking or unlocking and so forth. To the contrary to this, the conventional mechanical key system allows automatic lock of steering by releasing the ignition key from the key cylinder.

Summary of the invention

Therefore, it is an object of the present invention to provide a keyless entry system which facilitates automatic locking of steering when a predetermined steering lock condition is satisfied.

Another object of the invention is to provide a keyless entry system to operate vehicle devices including steering lock mechanism without using any mechanical key.

In order to accomplish the above-mentioned and other objects, a keyless entry system, is associated with a steering lock device. The steering lock device includes an electrically operated actuator for operating the steering lock device between locking and unlocking positions. Steering locking and unlocking operation is triggered by a predetermined vehicle operation, such as closing of the vehicular doors. A predetermined steering lock condition is checked as triggered the steering locking and unlocking operation. Steering locking and unlocking operation is carried out when the operation is triggered and the steering lock condition is satisfied.

According to the invention, a keyless entry system for an automotive vehicle for operating various vehicle devices including a door lock and a steering lock, comprises:

a portable wireless transmitter adapted to transmit a unique code indicative signal encoded to carry a preset unique code stored in the transmitter;

actuators, each associated with corresponding vehicle devices for operating the latter to a desired state, said actuator including a steering lock actuator associated with said steering lock for operating the latter between a locking state and an unlocking state;

a controller triggered by said manual switches for signalling said keyless entry system to operate a corresponding one of said vehicle devices;

a first detector for detecting the door close position for outputting a first detector signal;

a detector adapted to detect a predetermined steering lock condition and outputting a second detector signal when said steering lock condition is detected;

a detector for detecting whether said door lock is locked;

a controller mounted on the vehicle and adapted to transmit a demand signal for triggering said transmitter and receiving said unique code indicative signal, comparing the received unique code with a second preset code, and producing a control signal to operate at least one of said actuators only when the received unique code matches said second preset code, said controller being responsive to said first and second detector signals for transmitting said control signal to said steering lock actuator for performing steering locking and unlocking operation; and

a disabling means which becomes active when the vehicle door is closed and the door lock is locked, and responding, when activated, to said unique code-indicative signal for a period of time longer than a predetermined period of time to disable the operation of said controller, said disabling means detecting the presence of a user in the vehicle and remaining inactive when the presence of a user in the vehicle is detected.

Brief description of the drawings

The present invention will be understood more fully from the detailed description given herebelow and from the accompanying drawings of the preferred embodiment of the present invention, which, however, should not be taken to limit the invention to the specific embodiment but are for explanation and understanding only.

In the drawings:

Fig. 1 is a perspective view of a vehicle to which a preferred embodiment of a keyless entry system in accordance with the present invention is applied;

Fig. 2 is a block diagram showing the general circuit arrangement of the preferred embodiment of the keyless entry system according to the invention;

Fig. 3 is a schematic circuit diagram of a transmitter in the preferred embodiment of keyless entry system of Fig. 2;

Fig. 4 is a schematic circuit diagram of a controller in the preferred embodiment of the keyless entry system of Fig. 2;

Fig. 5 is a block diagram showing details of a microprocessor in the controller of Fig. 4;

Fig. 6 is a perspective view showing a loop antenna mounted on the external surface of the vehicle body near a door lock;

Fig. 7 is a perspective view of a vehicle showing loop antennas mounted on seat backs of front seats;

Fig. 8 is a rear view of a vehicle showing loop antennas mounted on a rear windshield near a trunk lid lock;

Fig. 9 is a cross-section of a steering lock device employed in the preferred embodiment of the keyless entry system according to the invention;

Fig. 10 is a plan view of the steering lock device of Fig. 9;

Fig. 11 is a side elevation of a locking rod in the steering lock device of Fig. 9;

Figs. 12A to 12C respectively show relationship of the locking rod of Fig. 11 and a rotor, in various operations positions;

Fig. 13 is a section taken along line XIII—XIII of Fig. 9;

Fig. 14 is an explanatory illustration showing a steering lock detector in the keyless entry system;

Fig. 15 is a flowchart of a program executed by a microprocessor in the transmitter of Fig. 3;

Fig. 16 is a flowchart of a main program to be executed by the microprocessor of the controller of Figs. 4 and 5;

Fig. 17 is a flowchart of a first sub-routine of the main program of Fig. 16;

Fig. 18 is a flowchart of a second sub-routine of the main program of Fig. 16;

Fig. 19 is a flowchart of a third sub-routine of the main program of Fig. 15;

Figs. 20 and 21 are flowchart of a fourth sub-routine of the main program of Fig. 16;

Fig. 22 is a flowchart of a fifth sub-routine of the main program of Fig. 16;

Fig. 23 is a flowchart of a sixth sub-routine of the main program of Fig. 15;

Fig. 24 is a flowchart of an interrupt program executed by interrupting execution of the main program and/or sub-routines of Figs. 16 to 21.

Description of the preferred embodiment

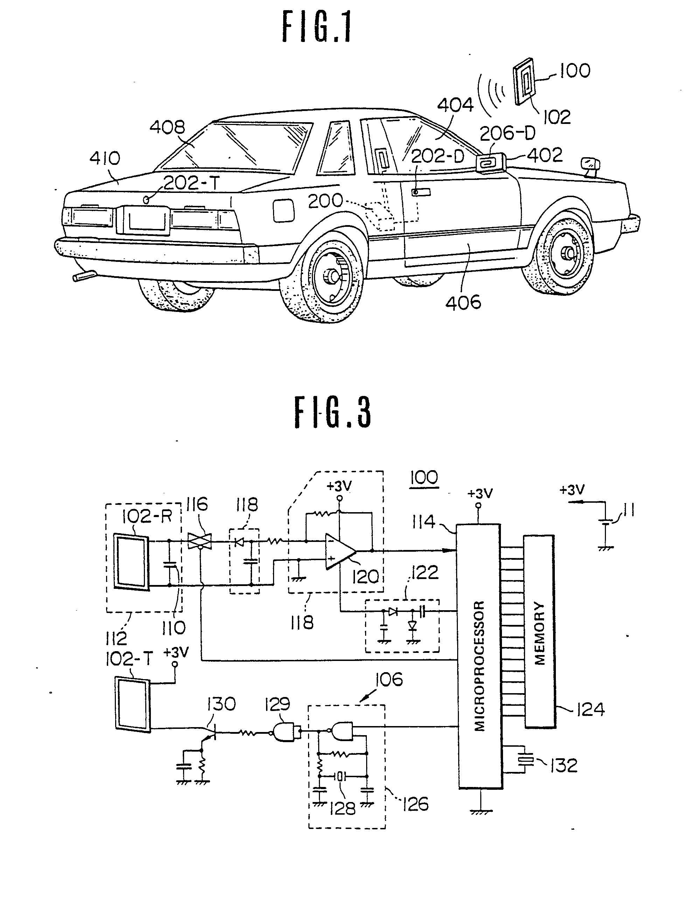

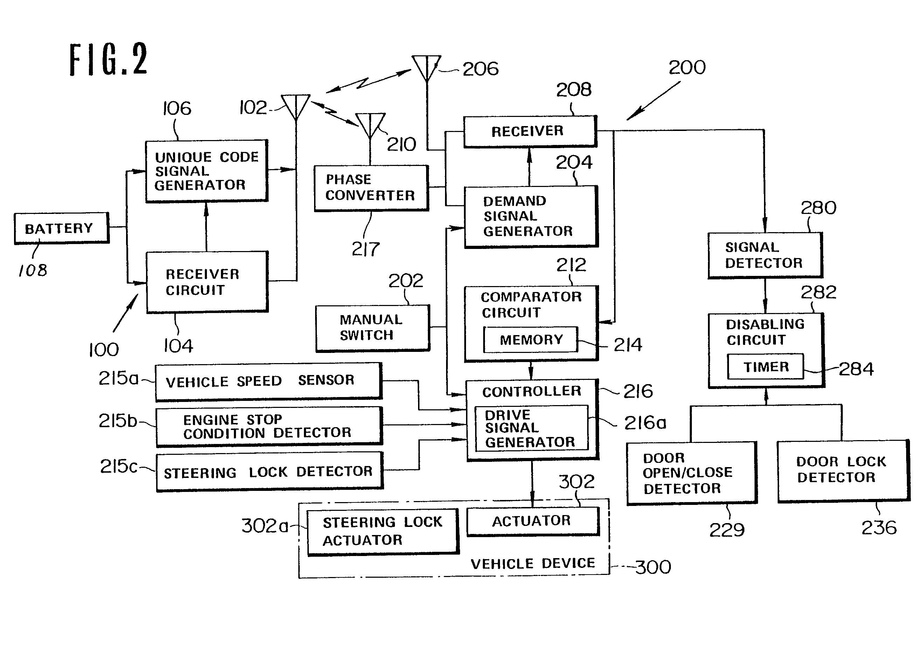

Referring now to the drawings, Figs. 1 and 2 show the general structure of the preferred embodiment of a keyless entry system according to the present invention. As shown in Fig. 1, the preferred embodiment of the keyless entry system of the present invention generally comprises a compact wireless transmitter 100 which is comparable in size with common bank or credit cards and so can be easily carried in a clothing pocket, and a controller 200 mounted on a vehicle. The controller 200 is connected with push-button-type manual switches 202 mounted on the outer surface of the vehicle body. The manual switches 202 are each located near the corresponding vehicle devices 300. In order to facilitate keyless operation, each of the vehicle devices is associated with corresponding actuator 302. In the shown embodiment, the keyless entry system is designed to operate a door lock and a trunk lid lock. Therefore, the manual switch 202-D for the door lock is mounted on the vehicle door 406. On the other hand, the manual switch 202-T for the trunk lid lock is mounted on the trunk lid 410 or at an appropriate location near the trunk lid lock.

The shown embodiment of the keyless entry system is designed to automatically operate a steering locking mechanism which will be described later. The steering locking mechanism includes a steering lock actuator 302a.

The transmitter 100 has a thin, rectangular casing 101 on which a loop antenna 102 is provided. A loop antenna 206-D is mounted near enough the manual switch 202-D for the user to be able to depress the manual switch 202-D while holding the transmitter 100 within broadcast range of the loop antenna 206-D.

The fundamental idea of the present invention will be discussed with reference to Fig. 2. The manual switch 202 serves to request operation of the vehicle device 300. The controller 200 is responsive to depression of the manual switch 202 to produce a radio signal at a specific frequency which will be hereafter referred to as "demand signal". A demand signal generator 204 in the controller produces the demand signal in response to depression of the manual switch 202. The demand signal is transmitted by a transmitter antenna 206. The transmitter antenna 206 may be mounted on the external surface of the vehicle body near the vehicle device 300 to be operated. For example, if the vehicle device 300 to be operated were the left-front door lock, the transmitter antenna 206 might then be mounted on the window pane of the left-front door or on a mirror mounted on the left-front door. In practice, the transmitter antenna 206 will be a loop-antenna printed on the chosen area of the vehicle.

The transmitter 100 also has a transmitter/receiver antenna 102 which may be a loop-antenna printed on the outer surface of a transmitter casing. The antenna 102 is connected to a receiver circuit 104 of the transmitter 100 to receive the demand signal from the controller. The receiver circuit 104 is, in turn, connected to a unique signal generator 106 which generates a radio signal indicative of a unique combination of several digits in binary code. The radio signal produced by the unique signal generator 106 will be referred to hereafter as "unique code signal". The code indicated by the unique code signal is unique for each transmitter and serves to identify the transmitter 100. The unique code signal of the unique code signal generator 106 is transmitted by the antenna 102.

A receiver 208 with a receiver antenna 210 is provided in the controller to receive the unique code signal from the transmitter 100. The receiver antenna 210 is also mounted on the external surface of the vehicle body near the transmitter antenna 206. The receiver 208 is connected to the demand signal generator 204 and responsive to the demand signal to be activated for a predetermined period of time. In other words, the receiver 208 is active for the predetermined period of time after the demand signal is transmitted. Signals received within the predetermined period of time are converted into binary code signals indicative of any and all digits encoded in the signal as they would be in the transmitter 100. The receiver 208 sends the converted binary code signal to a comparator circuit 212. The comparator circuit 212 includes a memory 214 storing a preset code which matches the unique code of the transmitter 100. The comparator circuit 212 compares the binary-coded digits from the receiver 208 with the preset code and produces a HIGH-level comparator signal when the codes match. A controller 216 including a driver signal generator 216a is responsive to the HIGH-level comparator signal produced by the comparator circuit 212 to produce a drive signal for an actuator 302 in the vehicle device.

In the shown embodiment, the controller 216 is adapted to detect a vehicle condition satisfying a predetermined steering lock condition. In the preferred embodiment, keyless steering lock operation is performed when the vehicle is stopping, engine is stopping and the unique code matching speed sensor 215a and an engine stop condition detector 215b. The vehicle speed sensor 215a produces a vehicle speed indicative signal. On the other hand, the engine stop condition detector is detective of engine stopping to produce an engine stopping state indicative signal. The controller 216 is also connected to a steering lock detector 215c which produces a steering locking condition indicative signal.

In cases where the keyless entry system is adapted to operate more than one vehicle device, the controller 216 is also connected to the manual switches 202 so as to be able to operate the corresponding vehicle devices. The controller 216 recognizes which of the manual switches 202 is operated and sends a driver signal to the actuator of the corresponding vehicle device.

In the aforementioned arrangement, the transmitter 100 uses a small, long-life battery 108 as a power source. In practice, a mercury battery or its equivalent could be used in the transmitter. On the other hand, the controller 216 uses a vehicle battery 218 as a power source. The aforementioned keyless entry system according to the present invention achieves conservation of battery power by being operative only when the manual switch is operated. It would be convenient to provide a weak battery alarm in the system.

The receiver 208 is also connected to a signal detector 280 which detects reception of the unique code signal from the transmitter 100. The signal detector 280 sends a detector signal to a disabling circuit 282 as long as the presence of the unique code signal is detected. The disabling circuit 282 is also connected to a door closure detector 229 and a door lock detecting switch 236. The disabling circuit 282 incorporates a timer 284 for measuring elapsed time from operation or depression of the one of the manual switches 202-D or 202-T. The disabling circuit 282 responds to the presence of the detector signal after a predetermined period of time, given that all of the doors are closed and locked as indicated by the door closure detector and the door lock detecting switch, to produce a disabling signal. The disabling signal disables production of the driver signal by the driver signal generator 216. On the other hand, while the driver signal generator 216 is disabled, the disabling circuit 282 is responsive to opening of one of the doors to stop the disabling signal and resume keyless entry operation.

In summary, locking the transmitter is recognized to be locked in the vehicle when all of the doors are closed and locked and the unique code signal from the transmitter is received continuously for a period longer than a preset period of time. The preset period of time is determined empirically such that the period is long enough for the user to move out of transmission range but short enough that the user will still be able to hear the alarm indicating that the transmitter is about to be left in the vehicle. In order to enable the user to unlock the door in order to remove the transmitter from the vehicle, the system remains operative for a few minutes, which should be long enough for the user to return to the vehicle and to operate the manual switch for the door lock. If the user fails to notice the alarm and therefore does not operate the keyless entry system to unlock the door and remove the transmitter from the vehicle, the keyless entry system is rendered inoperative after those few minutes to inhibit keyless entry operation until the door is unlocked by means of a mechanical key.

This satisfactorily and successfully prevents the vehicle from being stolen by simple operation of the manual switch while the transmitter is in the vehicle.

The present invention will be described in more detail, in terms of the preferred embodiment of the invention with reference to Figs. 2 to 4.

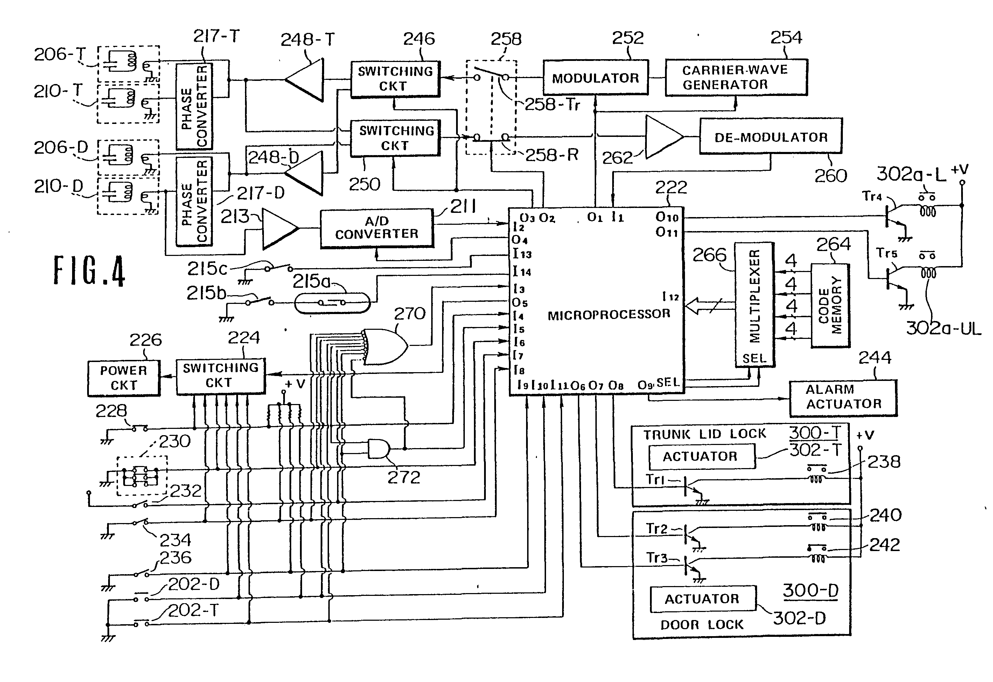

As shown in Figs. 2 and 3, as in the controller 200, the transmitter 100 is provided with a pair of loop antennas 102-R and 102-T which are printed on the outer surface of the transmitter casing (not shown). The antenna 102-R is connected to the receiver circuit 104 and serves as a receiver antenna. On the other hand, the antenna 102-T is connected to the unique signal generator 106 and serves as a transmitter antenna. A capacitor 110 is connected in parallel with the receiver antenna 102-R to form a passive antenna circuit 112. The antenna circuit 112 captures by electromagnetic induction the demand signal from the controller 200 produced in response to depression of one of the manual switches 202.

The antenna circuit 112 is connected to a microprocessor 114 via an analog switch 116, a detector circuit 118 and an amplifier 120. A negative power supply circuit 122 is inserted between an output terminal of the microprocessor 114 and the amplifier 120 to invert a 0 or +3V binary pulse output from the microprocessor into a 0 to −3V input to the amplifier. This negative power is supplied to the amplifier to adjust the bias point of the amplifier to 0V.

The microprocessor 114 is connected to a memory 124 storing the preset unique code. In practice, the memory stores four predetermined, four-bit, BCD digits. The memory 124 can be a ROM pre-masked with the preset code. However, in order to minimize the cost, it would be advantageous to use a circuit in the form of a printed circuit board including circuit elements corresponding to each bit. When the circuit element is connected, it is indicative of "1" and when the circuit element is cut or disconnected, it is indicative of "0". By this arrangement, the preset code may be input simply to the microprocessor 114.

The microprocessor 114 is adapted to be triggered by the demand signal from the controller 200, i.e., input to the microprocessor 114 through the antenna 102-R, the analog switch 116, the detector circuit 118 and the amplifier 120 serves as the trigger signal for the microprocessor. In response to the trigger signal, the microprocessor 114 reads the preset unique code from the memory 124 and sends a serial pulse-form unique code signal indicative of the unique code to a modulator 126. The modulator 126 includes a crystal oscillator 128 for generating a carrier wave for the unique code signal. In the modulator 126, the unique code signal and the carrier wave are modulated into a radio signal in which the unique code signal rides on the carrier wave. The modulated radio signal is output through a buffer 129, a high-frequency transistor 130 and a transmitter antenna 102-T.

Another crystal oscillator 132 is connected to the microprocessor 114. The oscillator 132 may serve as a clock generator for feeding clock to the microprocessor.

In the above arrangement of the transmitter, electric power is supplied to each component by a small, long-life-type lithium cell 134 such as are used in an electronic watch. The microcomputer to be used for the transmitter 100 is of the low-voltage CMOS type. The analog switch 118 and the amplifier 120 IC units are also chosen to be of the power-saving type. As a result, stand-by operation requires only about 4 to 5 mA. This means that the transmitter 100 can be used for about one year before replacing the lithium battery.

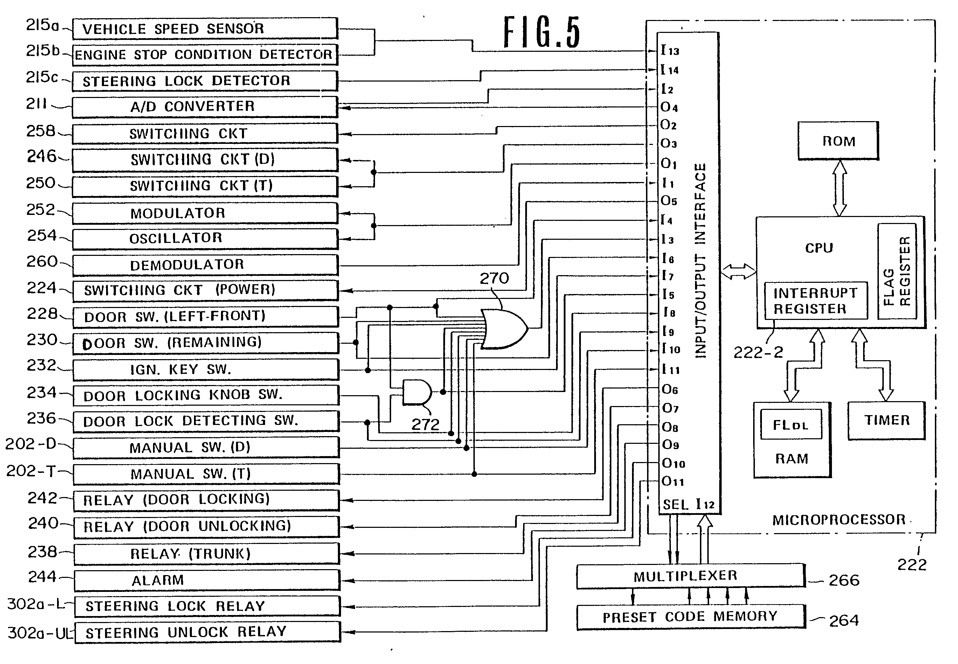

As shown in Figs. 4 and 5, the controller 200 comprises a microprocessor 222 including an input/output interface, CPU, ROM, RAM, timer and so forth. The microprocessor 222 is connected to manual switches 202-D and 202-T. In the shown embodiment, the keyless entry system is designed to operate a door lock 300-D and a trunk-lid lock 300-T. Accordingly, the manual switch 202-D is connected to operate the door lock 300-D and the manual switch 202-T is similarly operable when the trunk lid lock 300-T is to be operated. The manual switches 202-D and 202-T are connected to the input terminals $I_9$ and $I_{10}$ of the microprocessor 222. The manual switches 202-D and 202-T are also connected to a switching circuit 224 inserted between the output terminal $O_5$ of the microprocessor 222 and a power supply circuit 226.

The switching circuit 224 is also connected to a driver's door switch 228, passenger door switches 230, an ignition key switch 232, a door lock knob switch 234 and a door-lock-detecting switch 236. The driver's door switch 226 detects opening and closing of the left-front door adjacent the driver's seat and is closed while the left-front door is open. The passenger door switches 230, detects opening and closing of the right-front door and the rear doors. These switches 230 close when the corresponding door opens. The door switches are built and operated as conventionally utilized for door closure monitoring. Alternatively, it would be simpler to connect the switching circuit 224 to conventional door switches.

The ignition key switch 232 is installed within or near an ignition key cylinder and detects the presence of an ignition key in the key cylinder. The ignition key switch 232 is closed while the ignition key is within the key cylinder.

The door lock knob switch 234 is responsive to a manual door locking operation by which the door lock of the driver's door is manually operated in the door-locking direction. The door lock knob switch 234 closes when the door lock knob is operated manually to perform door locking. The door lock detecting switch 236 detects the locking state of the door lock; specifically the switch 236 is closed while any of the door locks are unlocked and is open when all of the door locks are in their locking positions.

The switching circuit 224 is responsive to closure of any one of the switches 202-D, 202-T, 228, 230, 232, 234 and 236 to trigger the power supply circuit 226 for a given period of time. The power supply circuit 226 is active for the given period of time to supply a vehicle battery power to the various components of the controller circuit. In addition, the switching circuit 224 is responsive to high-level output from the output terminal $O_5$ of the microprocessor 222 to be held active and thus sustain operation of the power supply circuit 226 as long as the high-level output continues. The switching circuit 224 deactivates the power supply circuit when the output level of the output terminal $O_5$ drops from high to low.

The microprocessor 222 has input terminals in its input/output interface to be connected to the driver's door switch 228, the passenger door switch 230, the ignition key switch 232, the door lock knob switch 234 and a door-lock-detecting switch 236. Also, the microprocessor 222 is connected to the steering lock detector 215c, the engine stop condition detector 215b and the vehicle speed detector 215a.

Output terminals $O_6$, $O_7$ and $O_8$ of the microprocessor 222 are respectively connected to actuator relays 242, 240 and 238 via switching transistors $Tr_1$—$Tr_3$. The actuator relay 238 is associated with an acuator 302-T of the trunk lid lock 300-T. The actuator relays 240 and 242 are associated with an actuator 302-D of the door lock 300-D. In practice, the actuator 302-D comprises a reversible motor which actuates the door lock 300-D to its locked position when driven in one direction and to its unlocked position when driven in the other direction. Two relays 240 and 242 are adapted to reverse the polarity of power supply and thus switch the driving direction of the reversible motor. For instance, when the relay 240 is energized, the reversible motor 302-D is driven in the door-unlocking direction. On the other hand, when the relay 242 is energized, the reversible motor 302-D is driven in the door-locking direction.

Therefore, the output level at the output terminal $O_7$ goes high when the door is to be unlocked and the output terminal $O_8$ goes high when the door is to be locked.

In addition, the microprocessor 222 has another output terminal connected to a steering lock relay 302a-L and a steering unlock relay 302a-UL through switching transistors Tr4 and Tr5.

The microprocessor 222 is programmed to execute a theft-preventive operation in response to a specific condition. For example, if the the door switch is closed while the door lock detecting switch is open, a theft-preventive alarm signal is output via the output terminal $O_9$ which is connected to an alarm actuator 244. In practice, the alarm actuator 244 may be connected to a vehicular horn to activate the latter in response to the theft-preventive alarm signal. This theft-preventive operation in keyless entry systems has been disclosed in the EP—A—00 73 068, published on March 2, 1983. The disclosure of this European Patent Application is herein incorporated by reference for the sake of disclosure. On the other hand, the theft-preventive operation could be performed by the microprocessor by counting erroneous operations within a given period of time.

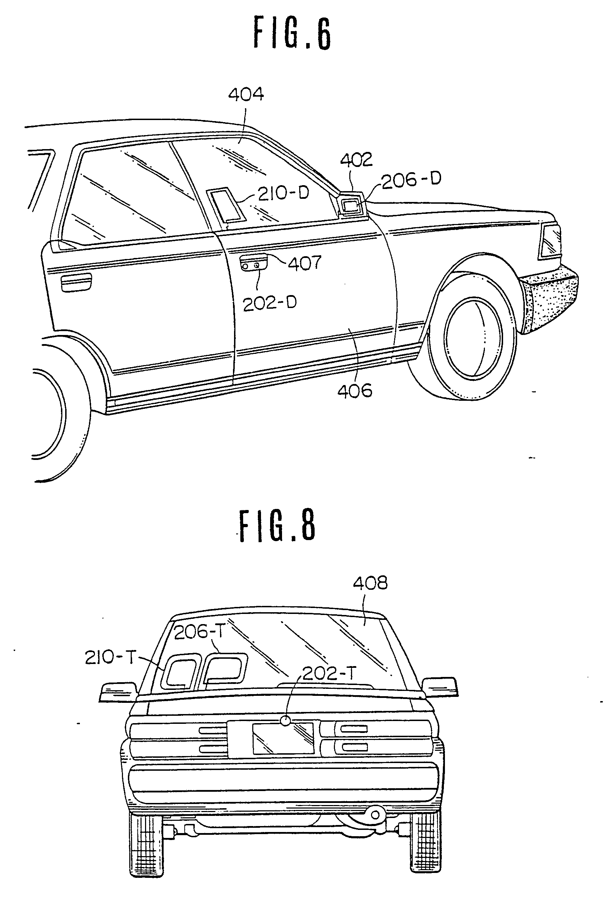

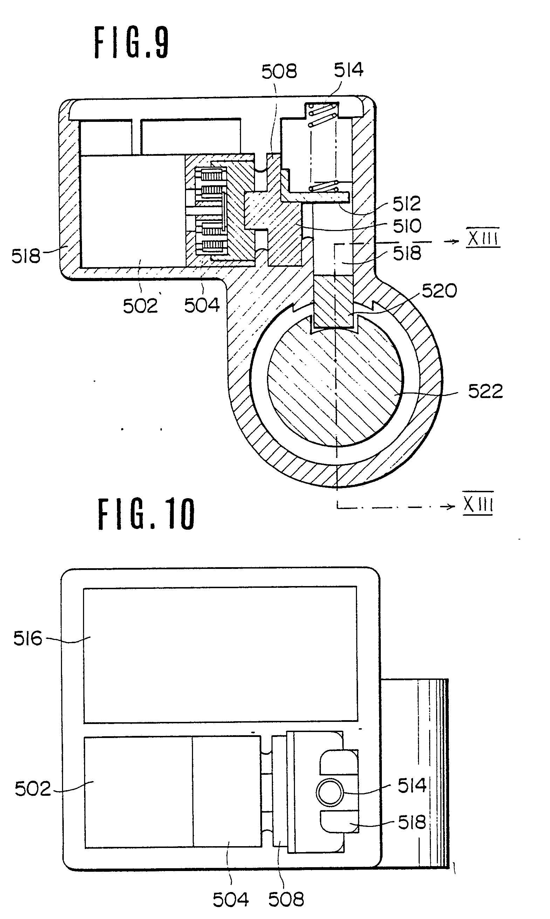

The antennas 206-D and 210-D in the shown embodiment are located near the door locks and the trunk lid locks. As an example, the antenna 206-D may be applied to or printed on the reflective surface of a door mirror 402, as shown in Fig. 6. The antenna 210-D may be applied to or printed on a window pane 404 of the vehicle side door 406. On the other hand, the antennas 206-T and 210-T are mounted near the trunk lid lock and may be applied to or printed on the rear windshield 408, as shown in Fig. 8.

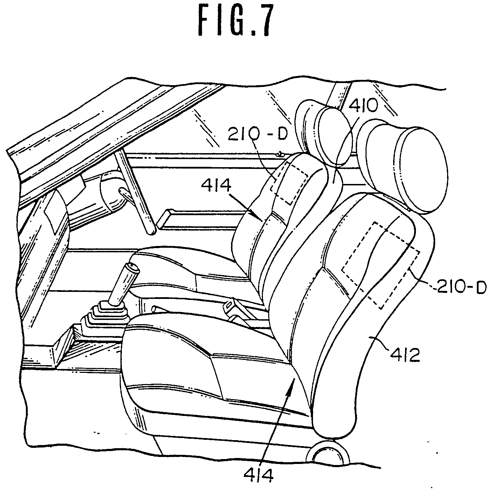

As shown in Fig. 4, the antennas 206-D and 210-D are coupled to transmit the demand signal $S_{DM}$ and receive the unique code signal $S_{CM}$ when the door lock 300-D is to be operated. The antenna 210-D is connected to a phase converter 217-D which shifts the phase of the unique code signal received via the antenna 210-D through 90°. In this embodiment, the antenna 210-D is mounted on the seat back of a vehicle seat as illustrated in Fig. 7, instead of on the side door window pane.

The antenna 210-D is also connected to an analog-to-digital converter (A/D onverter) 211 through a high-frequency amplifier 213. The A/D converter 211 outputs a digital signal $S_{Rf}$ indicative of the received signal level to the input terminal $I_2$ of the microprocessor 222. The A/D converter 211 is also connected to the output terminal $O_4$ of the microprocessor 222 and is gated by a trigger signal output through the output terminal $O_4$. Similarly, the antennas 206-T and 210-T are coupled to transmit the demand signal to the transmitter 100 and receive the unique code signal in return when operation of the trunk lid lock is requested via the manual switch 202-T. The antenna 210-T is connected to a phase converter 217-T which shifts the unique code signal phase received by the antenna 210-T through 90°.

The pairs of antennas 206-D, 210-D and 206-T, 210-T are connected for input from a switching circuit 246 through respectively corresponding high-frequency amplifiers 248-D and 248-T. The switching circuit 246 selectively activates one pair of antennas 206-D, 210-D or 206-T, 210-T to transmit the demand signal $S_{DM}$. For instance, when the manual switch 202-D is depressed to produce the demand signal $S_{DM}$ for operating the door lock 300-D, the antennas 206-D and 210-D become active to transmit the demand signal to the transmitter. The signal phase of the demand signal transmitted through the antenna 210-D is shifted through 90° by means of the phase converter 217-D. On the other hand, when the manual switch 202-T is depressed, the switching circuit 246 selects the antennas 206-T and 210-T. Similarly to the above, the demand signal $S_{DM}$ is thus transmitted to the transmitter through the antennas 206-T and 210-T and the signal phase of the demand signal transmitted through the antenna 210-T is shifted through 90° by the phase converter 217-T.

The switching circuit 246 is connected for input from a modulator 252 via a switch terminal 258-Tr of a switching circuit 258. The modulator 252 is, in turn, connected for input from the output terminal $O_1$ of the microprocessor 222. Similarly, the switching circuit 250 is connected to demodulator 260 through a switch terminal 258-R of the switching circuit 258 and an amplifier 262. The switch terminals 258-Tr and 258-R are adapted to alternate so that when the switch terminal 258-Tr is closed, the switch terminal 258-R is opened, and when the switch terminal-R is closed, the switch terminal 258-Tr is opened. When the switch terminal 258-Tr is closed, the controller 200 operates in transmitter mode to transmit the demand signal $S_{DM}$. On the other hand, when the terminal 258-R is closed, the controller 200 operates in receiver mode to receive the unique code-indicative signal from the transmitter 100.

The demodulator 260 is connected for output to the input terminal $I_1$ of the microprocessor 222.

The switching circuits 246 and 250 are connected to the output terminal $O_3$ of the microprocessor 222. The switching circuits 246 and 250 are operated in tandem to select one pair of antennas 206-D, 210-D or 206-T, 210-T. For instance, the switching circuit 246 connects the antennas 206-D and 210-D to the modulator via the switch terminal 258-Tr of the switching circuit 258 when the door lock operating manual switch 202-D is operated. At the same time, the switching circuit 250 connects the antennas 206-D and 210-D to the demodulator 260 through the switch terminal 258-R and the amplifier 262. Alternatively, when the trunk lid lock operating manual switch 202-T is operated, the switching circuit 246 connects the antennas 206-T and 210-T to the modulator 252 through the switch terminal 258-Tr and the switching circuit 250 connects the antennas 206-T and 210-T to the demodulator 260 via the switch terminal 258-R and the amplifier 262.

The modulator 252 is associated with an oscillator 254 which serves as a carrier-wave generator. The modulator 252 is triggered by the output at the output terminal $O_1$ of the microprocessor 222 to activate the carrier-wave generator 254 which then provides the fixed-frequency carrier wave. The modulator 252 modulates the carrier wave in accordance with the output from the output terminal $O_1$ to generate the demand signal $S_{DM}$ and then transmits same through the selected pair of antennas 206-D, 210-D or 206-T, 210-T. The demodulator 260 is adapted to separate the carrier wave component from the received unique code signal $S_{CD}$ so as to convert the radio signal into a binary signal representative of the unique code stored in the transmitter 100. The demodulator 260 applies the encoded binary signal to the input terminal $I_1$ of the microprocessor 222.

The microprocessor 222 is triggered by the input at the input terminal $I_1$ via the demodulator 260 to read a preset code from a preset code memory 264 via a multiplexer 266. The microprocessor 222 compares the unique code with the preset code read from the preset code memory 264 to judge whether the transmitter 100 identified by the unique code corresponds to the controller 200 and so is authorized to operate the vehicle devices. The microprocessor 222 outputs a driver signal through one of the output terminals $O_6$, $O_7$ and $O_8$ corresponding to the operate manual switch so as to operate the corresponding vehicle device, i.e. door lock or trunk lid lock, when the unique code matches the preset code.

It would be convenient for the present code memory 264 to be an external memory connectable to the terminal of the multiplexer 266. In this case, the preset code memory 264 could be stored with the corresponding transmitter 100 as a separate unit. The preset code memory 264 and the transmitter 100 would be added to the vehicle upon sale so that the separate memory-and-transmitter unit would not be separated from the matching controller. In practice, the preset code memory is programmed by shorting some of a plurality of individual bit cells so as to have a binary output corresponding to the unique code.

The switching circuit 258 is connected to the output terminal $O_2$ of the microprocessor 222 through which a state change-over signal is output. The state change-over signal is indicative of whether the system is transmitting the demand signal or receiving the unique code-indicative radio signal from the transmitter 100. In practice, the microprocessor 222 keeps the switching circuit 250 in the transmitting state for a given period of time in response to depression of one of the manual switches. Thereafter, the microprocessor 222 then switches the switching circuit 250 to the receiving state. Similarly to the switching circuit 246, the switching circuit 250 is connected to the output terminal $O_3$ of the microprocessor 222 to activate one of the antennas 210-D and 210-T according to which manual switch was depressed.

As will be seen from Fig. 5, the door switches 228 and 230, the ignition key switch 232, the door lock knob switch 234 and the door lock detecting switch 236 are respectively connected to the microprocessor 222 through input terminals $I_4$, $I_6$, $I_7$, $I_8$ and $I_9$.

Figs. 9 to 14 show construction of the steering lock device which can be operated by the shown embodiment of the keyless entry system according to the present invention. The steering lock device generally comprises a steering lock motor 502 associated with a reduction gear assembly 504, and a rotor 508. The rotor 508 has a cam section 510 associated with a hunger 512 for vertically operating the latter. The hunger 512 is normally biased downwardly by means of a coil spring 514. A hollow space 516 is defined in a housing 518 of the steering lock device. A steering lock motor control circuit is housed in the hollow space 516 for controlling operation of the steering lock motor. The steering lock motor control circuit may include the steering lock relay 302a-L and the steering unlock relay 302a-UL. The steering lock relay 302a-L and the steering in lock relay 302a-UL are arranged to change polarity of power supply for the steering lock motor 502 to drive the latter in locking and unlocking direction.

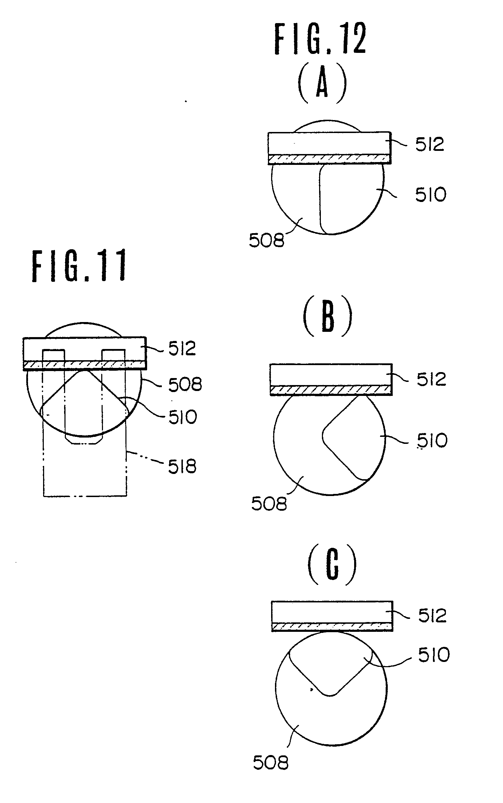

The hunger 512 is connected with a locking rod 518 which is opposed a locking recess 520 formed in a steering shaft 522. The locking rod 518 has a bifurcated leg sections 518a through which it engages to the hunger 512 for vertical movement toward and away from the locking recess 520 together with the hunger. As set forth above, the cam section 510 is placed in contact with the hunger 512 to operate the latter together with the locking rod 518. According to rotation of the rotor 508 as driven by the steering lock motor 502, the hunger 512 and the locking rod 518 moved vertically as shown in Figs. 12A to 12C. As will be appreciated, the hunger 512 is placed at the lowermost position in which the locking rod 518 engages the locking recess 520 of the steering shaft 522 for preventing the latter from rotating. On the hand, at the position of Fig. 12C, the hunger 512 with the locking rod 518 is positioned at the uppermost position. At this position, the locking rod 518 is positioned away from the locking recess 520 to allow free rotation of the steering shaft 522.

Though the specific construction of the steering lock device 302a has been disclosed hereabove for the sake of disclosure, the steering lock device is not necessary specified to the shown construction. Especially, though the shown construction will have one or more specific angular points to establish locking, it would be possible to modify the steering lock mechanism in various manner for locking at any angular position of the steering shaft.

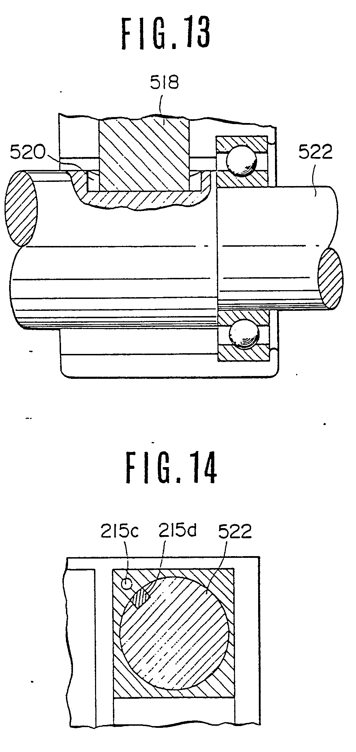

Fig. 14 shows an example of the steering lock detector 215c. As will be appreciated herefrom, the detector 215c is provided adjacent the rotor 508. A permanent magnet 215d is mounted on the outer periphery of the rotor 508. The steering lock detector 215c is a kind of proximity switch detective of the magnet 215d adjacent thereto. The magnet 215d is so arranged on the periphery of the rotor 508 as to be placed adjacent the detector 215c when the rotor 508 is placed an angular position of Fig. 12A. the detector 215c is adapted to produce High-level steering lock condition indicative signal when the locking engagement between the locking rod 518 and the locking recess 520 is established. On the other hand, the steering lock condition indicative signal is maintained low level as long as the locking engagement between the locking rod 518 and the locking recess 520 is not established and thus the detector 215c is positioned away from the magnetic 215d.

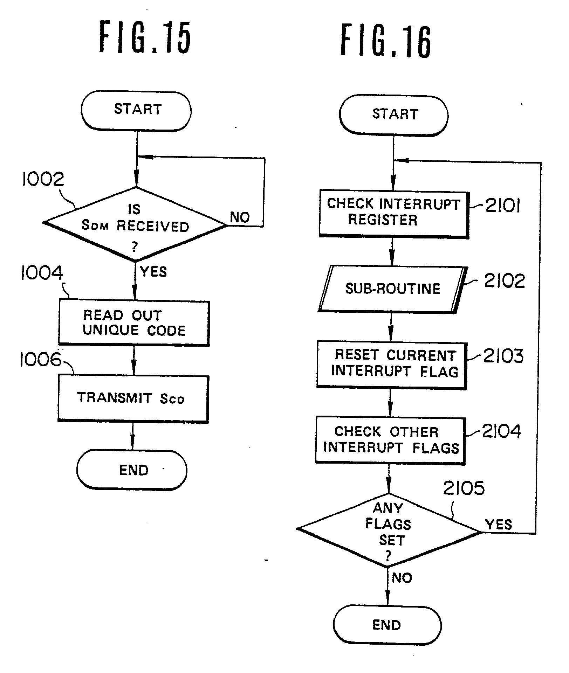

Fig. 15 illustrates the operation of the transmitter 100 in the form of a flowchart for a program executed by the microprocessor 114. The microprocessor 114 repeatedly executes the program of Fig. 9. An initial block 1002 checks for reception of the demand signal SDM. Execution of the block 1002 loops until the demand signal SDM is received through the antenna 102. Upon receipt of the demand signal SDM at the block 1002, control passes to a block 1004. In the block 1004, the preset unique code is read from the code memory 124. At a block 1006, a carrier wave produced by a carrier-wave generator 128 is modulated by the unique code signal generator 106 in accordance with the retrieved code to produce the unique code signal. The modulated unique code signal SCD is then transmitted through the antenna 102 to the controller 200 mounted on the vehicle. As set forth above, according to the shown embodiment, the transmitter 100 is designed to consume minimal electric power, particularly during stand-by operation at the block 1002. This minimizes the drain on the battery and thus prolongs its life time.

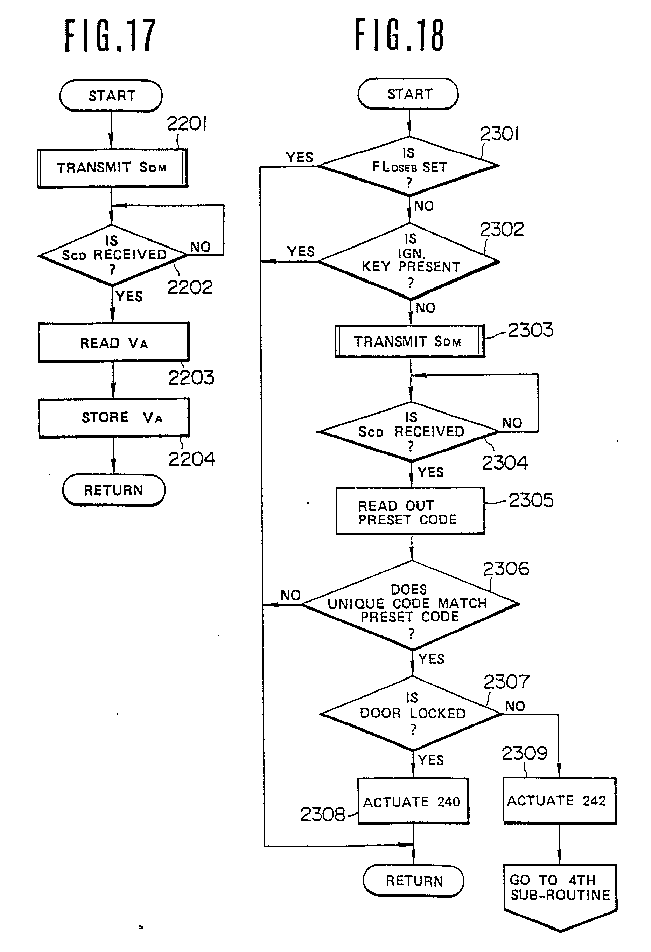

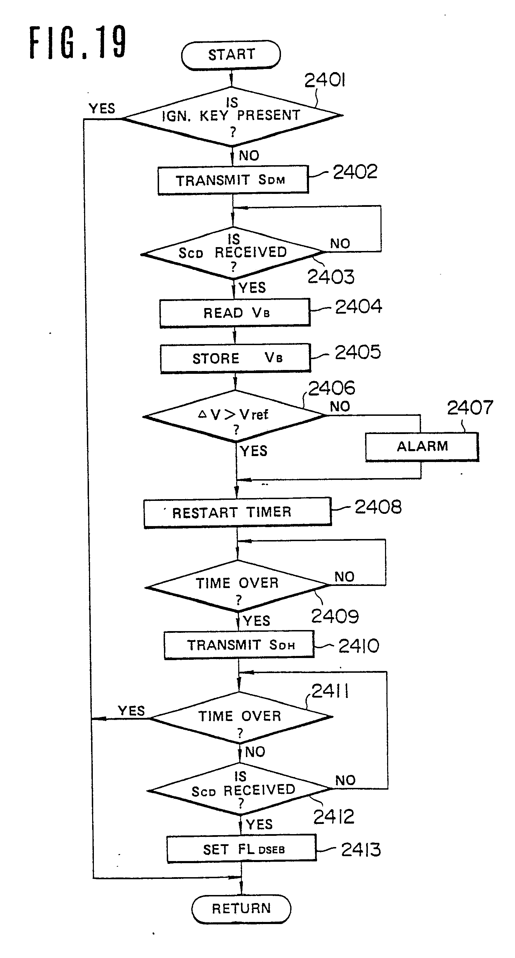

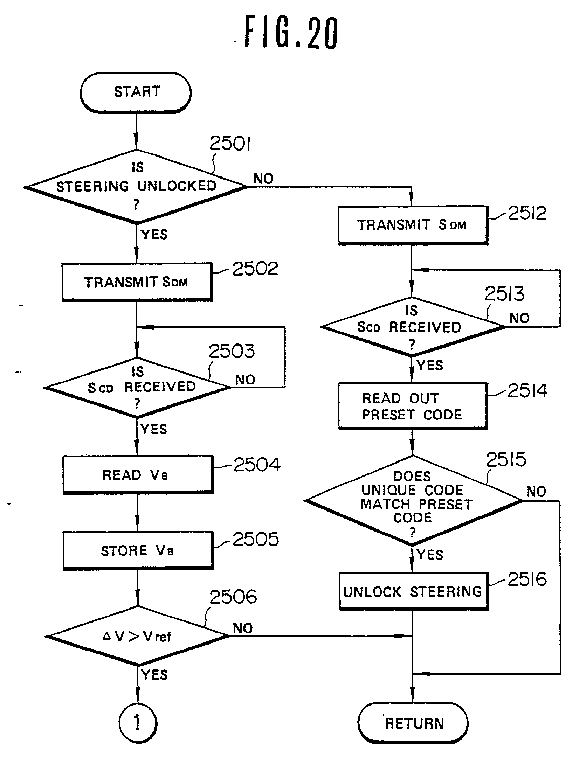

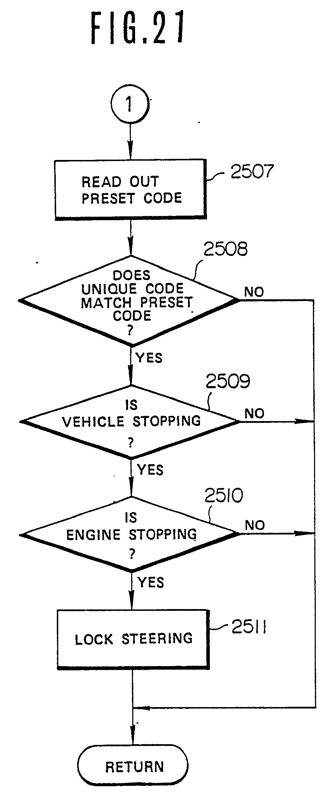

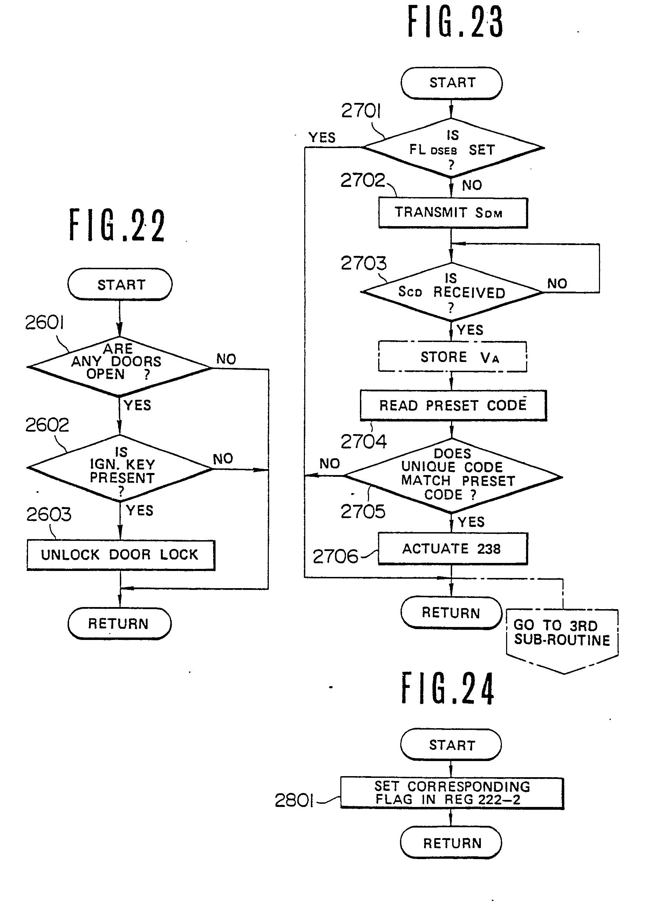

Figs. 16 to 22 show control program to be executed by the microprocessor 222 of the controller 200. Fig. 16 shows a flowchart of a main routine to be executed by the microprocessor 222, as a background job. The main routine of Fig. 16 is adapted to govern selection of various subroutine to be executed. Fig. 17 is a flowchart of a first subroutine to be triggered in response to opening of the door. Fig. 18 is a flowchart of a second subroutine to be executed in response to operation of the manual switch 202-D. Figs. 19 and 20 show a sequence of a third subroutine to be triggered in response to closing of the door as detected by the driver's door switch 228. Fig. 21 is a flowchart of a fourth subroutine to be triggered by operation of the manual door lock knob. Fig. 18 shows an interrupt program to be executed in response to operation of one of the driver's door switch 228, the passenger door switch 230, the ignition key switch 232, the door lock knob switch 234 and the door lock detecting switch 236. Therefore, the interrupt program of Fig. 22 is triggered in response to LOW-level input at the input terminal $I_4$.

The microprocessor 222 is also provided with a conventional interrupt register 222-2 consisting of flags indicative of occurrence of triggering inputs at each of the input terminals $I_4$, $I_{10}$, $I_5$, $I_8$ and $I_9$ in order of priority or occurrence of input. The contents of the register 222-2 are checked in sequence during execution of the main program following the end of each subroutine. For instance, when the driver's door is closed, the input level at the input terminal $I_4$ goes low the interrupt flag in register 222-2 corresponding to the input terminal $I_4$ is set. This interrupt signalling method is *per se* well known and can be carried out in various ways. For example, as used in the preferred embodiments, interrupts may be either maskable, i.e. delayable until some other process is completed or nonmaskable, i.e. triggering immediate execution of an associated routine in preference to all other operations.

Similarly, when the door lock operting manual switch 202-D is operated, the input level at the input terminal $I_{10}$ changes from high to low. Then, the corresponding flag in the register 222-2 is set to reflect the triggering change in input level at the input terminal $I_{10}$ to signal execution of the second subroutine. When the driver's door is opened and the door lock is operated to the locking position in preparation to locking the door, the door lock detecting switch 236 closes and the output signal from a series-connected AND gate 272 goes low. Thus, the input level at the input terminal $I_5$ goes low, where upon th third sub-routine of Fig. 13 is executed. When the door lock is manually unlocked, the door lock knob switch 234 closes to change the input level at the input terminal $I_8$ to the low level. Then, the fourth sub-routine of Fig. 17 is executed in response thereto. When the all of the doors are locked and thus the door lock detecting switch 236 closes, the input level at the input terminal $O_9$ goes low to trigger the fifth sub-routine.

Concerning Fig. 16, at a block 2101 of the main program, the register 222-2 is checked to see if an interrupt request has been received via the input terminals $I_3$—$I_{11}$. If so, one of the sub-routines in Figs. 11 to 15 is selected and executed at a block 2102 in accordance with the states of the flags in register 222-2.

After completing execution of the designated sub-routine the flag of register 222-2 corresponding to that routine is reset at a block 2103 and then, the contents of the interrupt register 222 are again checked at a block 2104 for later or lower priority interrupts requests yet to be handled. Thereafter, at a block 2105, control returns to block 2101 if there are any interrupt flags still set, indicating a request to execute another of the subsidiary routines illustrated in Figs. 11—16. The loop 2101—2105 is repeated until there are no further flags set in interrupt register 222-2, whereupon the interrupt control program ends following block 2105, and control of the microprocessor 222 returns to its main program or operating system at the point following that at which the program of Fig. 16 interrupted execution.

The operation of the controller 200 during execution of each of the sub-routines of Figs. 18 to 22 will be described in detail below.

Fig. 17 shows the first sub-routine to be executed when the driver's door is opened. Immediately after starting execution, the demand signal is produced and transmitted through the antennas 206-D and 210-D, at a block 2201. In order to select the antennas 206-D and 210-D, the output level at the output terminal $O_3$ remains low to connect the antennas 206-D and 210-D to the modulator 252 via the switch terminal 258-Tr of the switching circuit 258. At the same time, in order to operate the controller in the transmitter mode, the output level at the output terminal $O_2$ is held low to close the switch terminal 258-Tr and open the switch terminal 258-R. In response to a high-level output at the output terminal $O_1$, the modulator 252 is triggered to produce the demand signal $S_{DM}$ to be transmitted through the antennas 206-D and 210-D.

In response to the demand signal $S_{DM}$, the transmitter 100 becomes active to execute the foregoing program of Fig. 15 to transmit the unique code signal $S_{CD}$.

A block 2202 which checks for the unique code signal $S_{CD}$ is repeatedly performed until the signal $S_{CD}$ is received. During execution of the block 2202, the output level at the output terminal $O_4$ is held high to activate the A/D converter 211. After the unique code signal $S_{CD}$ is received at the block 2202, then the value $V_A$ input through the input terminal $I_2$ is read at a block 2203. The value $V_A$ is a binary signal digitalized by the A/D converter 211 and representative of the amplitude of the received unique code signal. Thereafter, the amplitude indicative value $V_A$ is stored in an appropriate memory block in RAM at a block 2204. Then, control returns to the control program of Fig. 10.

Fig. 18 shows the second sub-routine to be executed in response to a low-level input at the input terminal $I_{10}$ caused by operating the door lock manual switch 202-D. At an initial stage of execution of the second sub-routine, a disabling flag $FL_{DSEB}$ is checked at a block 2301, which disabling flag is set in a flag register 274 in the CPU when the controller 200 is disabled and is reset as long as the controller is enabled. If the disabling flag $FL_{DSEB}$ is set when checked at the block 2301, the routine of Fig. 18 ends immediately and control returns to the main program.

On the other hand, if the disabling flag $FL_{DSEB}$ is reset when checked at the block 2301, the presence of an ignition key (mechanical key) in the key cylinder (not shown) is checked for at a block 2302. In practice, the presence of the ignition key in the key cylinder is indicated by a high-level input at input terminal $I_7$ connected to the ignition key switch 232. If the input level at the input terminal $I_7$ is high, indicating that the ignition key is in the key cylinder, the user is judged to be in the vehicle. In this case, keyless entry operation is not to be performed and thus, control returns directly to the control program.

In the absence of the ignition key from the key cylinder the demand signal $S_{DM}$ is transmitted at a block 2303 in substantially the same manner as described with respect to the block 2201 of the first sub-routine. As set forth above, the transmission of the demand signal $S_{DM}$ continues for a predetermined period of time. The period for which the controller 200 remains in transmitter mode is defined by a timer 276 in the microprocessor 222. After the predetermined period of time expires, the output level at the output terminal $O_2$ changed from low to high in order to open the switch terminal 258-Tr and to close the switch terminal 258-R. As a result, electrical communication between the switching circuit 246 and the modulator is blocked and the switching circuit 248 establishes electrical communication between the demodulator 260 and the latter. This switching procedure for switching the operation mode of the controller 200 may also be used in the foregoing first sub-routine and the subsequent third and sixth routines which will be discussed later.

After switching the operation mode of the controller from the transmitter mode to receiver mode, reception of the unique code signal $S_{CD}$ from the transmitter is checked for at a block 2304. This block 2304 is repeated until the unique code signal $S_{CD}$ is received.

In practice, if the unique code signal $S_{CD}$ is not received within a given waiting period, the keyless entry system would be reset to prevent endless looping. In this case, a theft-preventive counter may be incremented by one and an alarm may be produced when the counter value reaches a given value.

Upon reception of the unique code signal $S_{CD}$ at the block 2304, the preset code is retrieved from the code memory 264 through the multiplexer 266 at a block 2305. The received unique code is compared with the preset code at a block 2306. If the unique code does not match the preset code when compared in the block 2306, then the theft-preventing counter may be incremented by one as set forth above and control returns to the main program. On the other hand, if the unique code matches the preset code, then the input level at the input terminal $I_9$ is checked at a block 2307 to see if the door is locked or unlocked. If the input level at the input terminal $I_9$ is still high, indicating that the door is in locked, the control signal is then fed to the relay 240 to drive the reversible motor 302-D in the unlocking direction, at a block 2308. After this block 2308, control returns to the main program. On the other hand, when the input level at the input terminal $I_9$ is low when checked at the block 2307, then the relay 242 is energized at a block 2309 to drive the reversible motor 302-D in the locking direction.

After executing of the block 2309, control passes to the fifth sub-routine illustrated in Fig. 22. In the fourth sub-routine, an initial block 2501 checks to see if any of the doors are open. In practice, this can be done by checking the input levels at the input terminals $I_4$ and $I_6$. If the input levels at the input terminals $I_4$ and $I_6$ are both high, indicating that all of the doors are closed, then control passes to a block 2602, in which the presence of the ignition key in the key cylinder is checked as in the block 2302 of the second sub-routine of Fig. 18. If the ignition key is in the key cylinder when checked at the block 2602, then the relay 240 is energized to drive the reversible motor 302-D in the unlocking direction at a block 2603. On the other hand, if none of the doors are open when checked at the block 2601 or if the ignition key is not in the key cylinder when checked at the block 2502, control simply returns to the control program.

Fig. 20 and 21 show the third sub-routine which is executed when the driver's door is closed and locked. At the initial stage of execution of the third sub-routine, the presence of the ignition key in the key cylinder is checked for at a block 2401 in substantially the same manner as described with respect to the block 2302 of the second sub-routine of Fig. 18. If the ignition key is there, the demand signal $S_{DM}$ is transmitted to the transmitter 100 for the predetermined period of time, at a block 2402. Then, reception of the unique code signal $S_{CD}$ is checked for at a block 2403. At the same time, the A/D converter 211 is triggered via the output terminal $O_4$ of the microprocessor. After the unique code signal $S_{CD}$ is detected at the block 2403, the input value $V_B$ at the input terminal $I_2$ is read in at a block 2404. The input value at the input terminal $I_2$ is representative of the signal amplitude of the unique code signal. At subsequent block 2405, the amplitude indicative value $V_B$ is stored in an appropriate memory block in RAM. The signal amplitude indicative values $V_A$ and $V_B$ are retrieved and processed to derive their absolute difference $\Delta V$, which is then compared to a reference value $V_{ref}$ at a block 2406. If the difference $\Delta V$ is less than or equal to the reference value $V_{ref}$, then the alarm signal is produced to trigger the alarm actuator 244, at a block 2407. After execution of the block 2409 or in cases where the difference $\Delta V$ is greater than the reference value $V_{ref}$, the timer 276 is reset and restarted at a block 2408. Elapsed time is checked repeatedly at a block 2409 for a given period of time. Thereafter, the demand signal $S_{DM}$ is transmitted to the transmitter once again, at a block 2410. Subsequently, reception of the unique code signal $S_{CD}$ from the transmitter 100 is checked for at a block 2412 following another time check at a block 2411. In practice, the block 2411 checks the elapsed time following transmission of the demand signal $S_{DM}$. Blocks 2413 and 2414 loop until the unique code signal is detected or a predetermined time limit elapses. In the latter case, control passes from block 2411 back to the control program. On the other hand, if the unique code signal is received within the time limit, then the disabling flag $FL_{DSEB}$ is set at a block 2413. As set forth with reference to the second sub-routine of Fig. 18, setting the disabling flag $FL_{DSEB}$ disables the keyless entry system.

Fig. 20 shows the third subroutine which is executed in response to the driver's door is closed and locked. At the initial stage of execution of the third subroutine, the steering lock indicative signal from the steering lock detector 215c is checked at a block 2501. When the steering lock indicative signal is held LOW level and thus the steering lock device in unlocking state is recognized as checked in the block 2501, the demand signal SDM at a block 2502. The demand signal SDM is maintained for a given period of time and terminated after expiration of the given period of time. Then, reception of the unique code signal SCD from the transmitter 100 is checked at a block 2503. At the same time, the A/D converter 211 is triggered via the output terminal O4 of the microprocessor 222. After the unique code signal SCD is detected at the block 2503, the input value VB at the input terminal I2 is read in at a block 2504. The input value at the input terminal $I_2$ is representative of the signal amplitude of the unique code signal. At subsequent block 2505, the amplitude indicative value $V_B$ is stored in an appropriate memory block in RAM. The signal amplitude indicative values $V_A$ and $V_B$ are retrieved and processed to derive their absolute difference $\Delta V$, which is then compared to a reference value $V_{ref}$ at a block 2506. If the difference $\Delta V$ is less than or equal to the reference value $V_{ref}$, then, process returns to the main routine. If desired, in advance of returning to the main routine, the alarm 244 may be triggered to produce an alarm.

On the other hand, when the difference $\Delta V$ is greater than the reference value $V_{ref}$, the preset code is read out at a block 2507. The read out preset code is compared with the input unique code at a block 2508. In the block 2508, judgement is made if the input unique code matches the preset code. When the input unique code does not matches the preset code, process returns to the main routine.

On ther hand, if the input unique code matches the preset code as compared in the block 2508, then the vehicle speed indicative signal from the vehicle speed detector, is checked to make judgement if the vehicle is stopping, at a block 2509. When the vehicle is running and thus the vehicle speed indicative signal have a value representative of a vehicle speed other than zero, then process returns to the main routine. Alternatively, when the vehicle speed indicative signal value shows that the vehicle is stopping as checked at the block 2509, then engine drive condition indicative signal from the engine stop condition detector 215b is checked at a block 2510. If the engine is running and thus the engine drive condition indicative signal have a value representing engine running condition condition, the process returns to the main routine.

Alternatively, when the engine stopping is detected as checked at the block 2510, drive signal for energizing the steering lock relay 302a-L is output at a block 2511. By energization of the steering lock relay 302a-L, the steering lock motor 502 is driven in steering locking direction to establish locking engagement between the locking rod 518 and the locking recess 520 of the steering shaft 522.

After operating the steering lock device to establish steering locking, the process returns to the main routine.

On the other hand, when the steering locking state is detected as checked at the block 2501, then process does to a block 2512 to output the demand signal SDM. Similarly to the foregoing block 2502, the demand signal is maintained for the given period of time and terminates when the given period of time expires. Reception of the unique code signal SCD is checked at a block 2513. When reception of the unique code signal is detected as checked at the block 2513, the preset code in the controller is read out at a block 2514. The read preset code and the input unique code are compared to each other for making a judgement whether the input unique code matches the preset code, at a block 2515. If the input unique code does not match the preset code, the process returns to the main routine. Alternatively, when the input unique code matches the preset code, a control signal is fed to the steering unlock relay 302a-UL to drive the steering lock motor 502 in steering unlocking direction to release locking engagement between the locking rod 518 and the locking recess 520 on the steering shaft 522 at a block 2516. After this operation, the process returns to the main routine.

Fig. 23 illustrates the sixth sub-routine which is to be executed in response to a low-level input at the input terminal $I_{11}$ caused by depression of the trunk lid lock operating manual switch 202-T. As in the foregoing second sub-routine of Fig. 12, the first block 2701 checks the disabling flag $FL_{DSEB}$. If the disabling flag $FL_{DSEB}$ is set, control returns to the control program. On the other hand, if the disabling flag $FL_{DSEB}$ is reset, the demand signal $S_{DM}$ is transmitted for the predetermined period of time, at a block 2702. At the block 2703, reception of the unique code signal $S_{CD}$ is checked for repeatedly. If the unique code signal is received, the preset code is retrieved from the code memory 264, at a block 2704. The unique code is compared to the preset code at a block 2705. If the unique code matches the preset code, the control signal is fed to the relay 238 to energize the latter to actuate the trunk lid lock actuator 302-T to unlock the trunk lid lock 300-T, at a block 2706. Otherwise, control returns directly to the control program.

Fig. 24 illustrates an interrupt signaling routine triggered by a high-level input at input terminal $I_3$. This routine consists of a single block 2801 in which the interrupt register flag corresponding to the triggering input source is set. Note that some conditions triggering a high-level input may not have corresponding interrupt flags. In practice, this routine may be performed automatically by hard-wired connections.

**Claims**

1. A keyless entry system for an automotive vehicle for operating various vehicle devices including a door lock, a steering lock and manual switches, characterized by:

a portable wireless transmitter (100) adapted to transmit a unique code indicative signal encoded to carry a preset unique code stored in said transmitter;

actuators (302), each associated with corresponding vehicle devices (300) for operating the latter to a desired state, said actuators including a steering lock actuator (302a) associated with said steering lock for operating the latter between a locking state and an unlocking state;

a controller (216) triggered by said manual switches (202) for signalling said keyless entry system to operate a corresponding one of said vehicle devices (300);

a first detector (229) for detecting the door close position for outputting a first detector signal;

a detector (215c) adapted to detect a predetermined steering lock condition and outputting a second detector signal when said steering lock condition is detected;

a detector (236) for detecting whether said door lock is locked;

a controller (200) mounted on the vehicle and adapted to transmit a demand signal for triggering said transmitter (100) and receiving said unique code indicative signal, comparing the received unique code with a second preset code, and producing a control signal to operate at least one of said actuators (302) only when the received unique code matches said second preset code, said controller (200) being responsive to said first and second detector signals for transmitting said control signal to said steering lock actuator (302a) for performing steering locking and unlocking operation; and

a disabling means (282) which becomes active when the vehicle door is closed and the door lock (300-D) is locked, and responding, when activated, to said unique code-indicative signal for a period of time longer than a predetermined period of time to disable the operation of said controller, said disabling means (282) detecting the presence of a user in the vehicle and remaining inactive when the presence of a user in the vehicle is detected.

2. The keyless entry system as set forth in claim 1, which further comprises a manual operation mechanism associated with said door lock (300-D) for allowing manual operation of said door lock between locking and unlocking states.

3. The keyless entry system as set forth in claim 2, which further comprises a detector detecting manual operation of said manual operation mechanism to the locking position.

4. The keyless entry system as set forth in claim 1, wherein said disabling means (282) produces an alarm after expiration of a first given period of time following production of said code-indicative radio in response to said second demand signal and then produces said disabling signal after expiration of a second given period of time thereafter.

5. The keyless entry system as set forth in claim 4, wherein said second given period of time is substantially longer than said first given period of time.

6. The keyless entry system as set forth in claim 5, wherein the difference between said first and second given periods of time is long enough to allow the user to operate said manual switches (202) again and to remove said transmitter (100) from the vehicle.

7. The keyless entry system as set forth in claim 1, which further comprises an ignition key detector which produces a signal indicative of the presence of an ignition key in a key cylinder when said ignition key is in said ignition key cylinder, and wherein when the vehicle doors are closed and locked, said controller (200) is responsive to said key-indicative signal to disable said disabling means (282).

8. The keyless entry system as set forth in claim 1, which further comprises an ignition key detector which produces a signal indicative of the presence of an ignition key in a key cylinder when said ignition key is in said ignition key cylinder, and wherein said controller (200) is responsive to said key-indicative signal and operation of said manual switches (202) to disable the keyless entry system.

9. The keyless entry system as set forth in any one of claims 1 to 8, wherein said second detector (215b) is detective of an engine stopping and produces said second detector signal when engine stopping is detected.

10. The keyless entry system as set forth in any one of claims 1 to 8, wherein said second detector (215a) is detective of a vehicle stopping and produces said second detector signal when the vehicle stopping state is detected.

11. The keyless entry system as set forth in any one of claims 1 to 8, wherein said second detector (215) is detective of an engine stopping and a vehicle stopping and produces said second detector signal when the engine stopping and the vehicle stopping are both detected.

12. The keyless entry system as set forth in any one of claims 1 to 8, wherein said controller (200) is triggered for performing steering locking and unlocking operation, transmits a demand signal to said transmitter (100) and compares the unique code transmitted from said transmitter with said preset code for enabling said steering locking and unlocking operation only when said unique code matches said preset code.

**Patentansprüche**

1. Schlüsselloses Zutrittssystem für Fahrzeuge zur Betätigung verschiedener Fahrzeugeinrichtungen einschließlich Türverriegelung, Lenkradschloß und Handschaltern, gekennzeichnet, durch:

einen tragbaren Sender (100) zur drahtlosen, kodierten Übertragung eines einen einzigen Kode darstellenden Signals, der in dem Sender gespeichert ist;

Betätigungseinrichtungen (302), die jeweils mit entsprechenden Fahrzeugeinrichtungen (300) verbunden sind, und ein Betätigungsglied (302a) für ein Lenkradschloß aufweisen, das dieses zwischen einem verriegelten und einem nicht verriegelten Zustand hin- und herschaltet;

eine Steuereinheit (216), die zur Betätigung einer Fahrzeugeinrichtung (300) über das schlüsselose Zutrittssystem durch Handschalter (202) angesteuert wird;

einen ersten Detektor (292) zur Erzeugung eines ersten Detektorsignales, wenn eine entsprechende Tür geschlossen ist;

einen Detektor (215c) für eine bestimmte Stellung des Lenkradschlosses und zur Abgabe eines zweiten Detektorsignales, wenn diese Lenkradschloßstellung festgestellt wird;

einen Detektor (236) zur Erfassung der Verriegelung des entsprechenden Türschlosses;

eine in dem Fahrzeug angebrachte Steuereinheit (200), die zur Ansteuerung des Senders (100) ein Anforderungssignal aussendet und das den einzigen Code darstellende Signal empfängt, den empfangenen Code mit einem zweiten, gesetzten Code vergleicht und ein Steuersignal zur Betätigung mindestens eines der Betätigungsglieder (302) genau dann erzeugt, wenn der empfangene, einzige Code mit dem zweiten, gesetzten Code übereinstimmt, wobei die Steuereinheit (200) zur Übertragung des Steuersignales zu dem Betätigungsglied (302a) für das Lenkradschloß und zur Ausführung der Lenkradverriegelung bzw. -entriegelung auf die ersten und zweiten Detektorsignale anspricht; und

eine Abschalteinrichtung (282), die aktiviert wird, wenn die Fahrzeugtür geschlossen und das Türschloß (300-D) verriegelt ist und bei Aktivierung für eine Zeitperiode, die länger ist als eine vorbestimmte Zeitperiode, auf das den einzigen Code darstellende Signal antwortet, um die Steuereinheit abzuschalten, wobei die Abschalteinrichtung (282) die Anwesenheit eines Benutzers in dem Fahrzeug erfaßt und in diesem Falle nicht erregt bleibt.

2. Vorrichtung nach Anspruch 1, weiterhin gekennzeichnet, durch einen Mechanismus für manuelle Betätigung, der mit dem Türschloß (300-D) verbunden ist und eine Verriegelung bzw. Entriegelung von Hand erlaubt.

3. Vorrichtung nach Anspruch 2, gekennzeichnet durch einen Detektor zur Erfassung der Umschaltung des Mechanismus' für manuelle Betätigung in die verriegelte Stellung.

4. Vorrichtung nach Anspruch 1, dadurch gekennzeichnet, daß die Abschaltvorrichtung (282) nach Verstreichen einer gegebenen ersten Zeitdauer einen Alarm erzeugt, der in Abhängigkeit von dem zweiten Anforderungssignal von dem den Code enthaltenen Signal erfolgt ist und dann nach Verstreichen einer zweiten gegebenen Zeitperiode das Abschaltsignal erzeugt.

5. Vorrichtung nach Anspruch 4, dadurch gekennzeichnet, daß die zweite gegebene Zeitperiode wesentlich länger ist als die erste gegebene Zeitperiode.

6. Vorrichtung nach Anspruch 5, dadurch gekennzeichnet, daß die Differenz zwischen der ersten und zweiten gegebenen Zeitperiode lang genug ist, um dem Benutzer die erneute Betätigung des Handschalters (202) sowie die Entfernung des Senders (100) aus dem Fahrzeug zu gestatten.

7. Vorrichtung nach Anspruch 1, gekennzeichnet durch einen Zündschlüssel-Detektor, der ein Signal erzeugt, dad das Vorhandensein des Zündschlüssels im Schlüselzylinder anzeigt, sowie eine Steuereinheit (200) zur Abschaltung der Abschalteinrichtung (282), die auf das Schlüssel-Detektorsignal anspricht, wenn die Fahrzeugtüren geschlossen und verriegelt sind.

8. Vorrichtung nach Anspruch 1, gekennzeichnet durch einen Zündschlüssel-Detektor, der ein Signal erzeugt, das das Vorhandensein eines Zündschlüssels in dem Schlüsselzylinder anzeigt, sowie eine Steuereinheit (200) zur Abschaltung des schlüssellosen Zutrittssystems, die auf das Schlüssel-Detektorsignal sowie auf die Betätigung des Handschalters (202) anspricht.

9. Vorrichtung nach einem der Ansprüche 1 bis 8, dadurch gekennzeichnet, daß der zweite Detektor (215b) ein zweites Detektorsignal erzeugt, wenn der Motor abgestellt wird.

10. Vorrichtung nach einem der Ansprüche 1 bis 8, dadurch gekennzeichnet, daß der zweite Detektor (215a) eine zweites Detektorsignal erzeugt, wenn das Fahrzeug angehalten wird.

11. Vorrichtung nach einem der Ansprüche 1 bis 8, dadurch gekennzeichnet, daß der zweite Detektor (215) ein zweites Detektorsignal erzeugt, wenn der Motor abgeschaltet und das Fahrzeug angehalten wird.

12. Vorrichtung nach einem der Ansprüch 1 bis 8 dadurch gekennzeichnet, daß die Steuereinheit (200) zur Ausführung des Lenkradverriegelung und -entriegelung getriggert wird, ein Anforderungssignal zu dem Sender (100) aussendet und den einzigen, von dem Sender übertragenen Code mit dem gesetzten Code vergleicht, so daß die Lenkradverriegelung- und entriegelung nur dann freigegeben wird, wenn der übertragene Code mit dem gesetzten Code übereinstimmt.

**Revendications**

1. Système d'accès sans clef pour un véhicule automobile pour actionner différents dispositifs du véhicule comprenant une serrure de porte, une serrure de direction et des commutateurs manuels, caractérisé par:

un émetteur radio portatif (100) adapté pour émettre un signal indiquant un code unique codé pour porter un code unique prédéterminé stocké dans ledit émetteur;

des dispositifs de commande (302) associés chacun aux dispositifs (300) du véhicule correspondants pour actionner ceux-ci à un état désiré, lesdits dispositifs de commande comprenant un dispositif de commande de blocage de direction (302a) associé audit blocage de direction pour actionner ce dernier entre un état verrouillé et un état déverrouillé;

un élément de commande (216) déclenché par lesdits commutateurs manuels (202) pour signaler audit système d'accès sans clef d'actionner l'un correspondant desdits dispositifs (300) du véhicule;

un premier détecteur (229) pour détecter la position de porte fermée pour produire en sortie un premier signal de détecteur;

un détecteur (215c) adapté pour détecter un état de blocage de direction prédéterminé et produisant en sortie un second signal de détecteur lorsque ledit état de blocage de direction est détecté;

un détecteur (236) pour détecter si la serrure de porte est verrouillée;

un élément de commande (200) monté sur le véhicule et adapté pour transmettre un signal de demande pour déclencher ledit émetteur (100) et recevant ledit signal indiquant le code unique, comparant le code unique reçu à un second code prédéterminé, et produisant un signal de commande pour actionner au moins l'un desdits dispositifs de commande (302) seulement lorsque le code unique reçu correspond audit second code prédéterminé, ledit élément de commande (200) étant sensible auxdits premier et second signaux de détecteur pour transmettre ledit signal de commande audit dispositif de commande (302a) de blocage de direction pour réaliser l'opération de blocage et de déblocage de direction; et

un moyen de mise hors service (282) qui devient actif lorsque la porte du véhicule est fermée et lorsque la serrure de porte (300-D) est verrouillée, et répondant, lorsqu'il est activé, audit signal indiquant le code unique pendant une période plus longue qu'une période prédéterminée pour mettre hors service l'action dudit élément de commande, ledit moyen de mise hors service (282) détectant la présence d'un utilisateur dans le véhicule et restant inactif lorsque la présence d'un utilisateur dans le véhicule est détectée.

2. Système d'accès sans clef selon la revendication 1, qui comprend en outre un mécanisme d'actionnement manuel associé à ladite serrure de porte (300-D) pour permettre l'actionnement manuel de ladite serrure de porte entre les états de verrouillage et de déverrouillage.

3. Système d'accès sans clef selon la revendication 2, qui comprend en outre un détecteur détectant l'actionnement manuel dudit mécanisme d'actionnement manuel vers la position de verrouillage.

4. Système d'accès sans clef selon la revendication 1, dans lequel ledit moyen de mise hors service (282) produit une alarme après expiration d'une première période donnée suivant la production dudit signal radio indiquant le code en réponse audit second signal de demande et produit ensuite ledit signal de mise hors service après l'expiration d'une seconde période de temps.

5. Système d'accès sans clef selon la revendication 4, dans lequel ladite seconde période donnée est sensiblement plus longue que ladite première période donnée.

6. Système d'accès sans clef selon la revendication 5, dans lequel la différence entre lesdites première et seconde périodes données est suffisamment longue pour permettre à l'utilisateur d'actionner lesdits commutateurs manuels (202) de nouveau et de retirer ledit émetteur (100) du véhicule.

7. Système d'accès sans clef selon la revendication 1, qui comprend en outre un détecteur de clef de contact qui produit un signal indiquant la présence d'une clef de contact dans un cylindre de clef lorsque ladite clef de contact est dans ledit cylindre de clef de contact, et dans lequel, lorsque les portes du véhicule sont fermées et verrouillées, ledit élément de commande (200) est sensible audit signal indiquant la clef pour mettre hors service ledit moyen de mise hors service (282).

8. Système d'accès sans clef selon la revendication 1, qui comprend en outre un détecteur de clef de contact qui produit un signal indiquant la présence d'une clef de contact dans un cylindre de clef lorsque ladite clef de contact est dans ledit cylindre de clef de contact, et dans lequel ledit élément de commande (200) est sensible audit signal indiquant la clef et l'actionnement desdits commutateurs (202) manuels pour mettre hors service le système d'accès sans clef.

9. Système d'accès sans clef selon l'une des revendications 1 à 8, dans lequel ledit second détecteur (215b) détecte un arrêt du moteur et produit ledit second signal de détecteur lorsque l'arrêt du moteur est détecté.

10. Système d'accès sans clef selon l'une des revendications 1 à 8, dans lequel ledit second détecteur (215a) détecte un arrêt du véhicule et produit ledit second signal de détecteur lorsque l'état d'arrêt du véhicule est détecté.

11. Système d'accès sans clef selon l'une des revendications 1 à 8, dans lequel ledit second détecteur (215) détecte un arrêt du moteur et un arrêt du véhicule et produit ledit second signal de détecteur lorsque l'arrêt du moteur et l'arrêt du véhicule sont détectés tous les deux.

12. Système d'accès sans clef selon l'une des revendications 1 à 8, dans lequel ledit élément de commande (200) est déclenché pour réaliser l'opération de blocage et de déblocage de direction, transmet un signal de demande audit émetteur (100) et compare le code unique émis par ledit émetteur audit code prédéterminé pour permettre ladite opération de blocage et de déblocage de direction seulement lorsque ledit code unique correspond audit code prédéterminé.

# FIG.1

# FIG.3

1

FIG.2

FIG.4

EP 0 158 354 B1

# FIG.5

| | |
|---|---|
| 215a | VEHICLE SPEED SENSOR |
| 215b | ENGINE STOP CONDITION DETECTOR |
| 215c | STEERING LOCK DETECTOR |
| 211 | A/D CONVERTER |
| 258 | SWITCHING CKT |
| 246 | SWITCHING CKT (D) |
| 250 | SWITCHING CKT (T) |
| 252 | MODULATOR |
| 254 | OSCILLATOR |
| 260 | DEMODULATOR |
| 224 | SWITCHING CKT (POWER) |
| 228 | DOOR SW. (LEFT-FRONT) |
| 230 | DOOR SW. (REMAINING) |
| 232 | IGN. KEY SW. |
| 234 | DOOR LOCKING KNOB SW. |
| 236 | DOOR LOCK DETECTING SW. |
| 202-D | MANUAL SW. (D) |
| 202-T | MANUAL SW. (T) |
| 242 | RELAY (DOOR LOCKING) |
| 240 | RELAY (DOOR UNLOCKING) |
| 238 | RELAY (TRUNK) |
| 244 | ALARM |
| 302a-L | STEERING LOCK RELAY |
| 302a-UL | STEERING UNLOCK RELAY |

$I_{13}$ $I_{14}$ $I_2$ $O_4$ $O_2$ $O_3$ $O_1$ $I_1$ $O_5$ $I_4$ $I_3$ $I_6$ $I_7$ $I_5$ $I_8$ $I_9$ $I_{10}$ $I_{11}$ $O_6$ $O_7$ $O_8$ $O_9$ $O_{10}$ $O_{11}$ SEL $I_{12}$

270

272

INPUT/OUTPUT INTERFACE

ROM

CPU

INTERRUPT REGISTER

FLAG REGISTER

222-2

$FL_{DL}$ RAM

TIMER

MICROPROCESSOR

222

MULTIPLEXER — 266

PRESET CODE MEMORY — 264

EP 0 158 354 B1

# FIG.6

404

210-D

402

206-D

407

202-D

406

# FIG.8

408

206-T

210-T

202-T

# FIG.7

# FIG.9

508    514

518

502    504

512
510
518 → $\overline{XIII}$

520

522

→ $\overline{XIII}$

# FIG.10

516

502

514
518

504    508

# FIG.12
## (A)

512

510

508

# FIG.11

512

508

510

518

## (B)

512

510

508

## (C)

512

510

508

# FIG. 13

518

520

522

# FIG. 14

215c  215d  522

# FIG.15

START

1002 — IS S_DM RECEIVED ? — NO

YES

1004 — READ OUT UNIQUE CODE

1006 — TRANSMIT S_CD

END

# FIG.16

START

CHECK INTERRUPT REGISTER — 2101

SUB-ROUTINE — 2102

RESET CURRENT INTERRUPT FLAG — 2103

CHECK OTHER INTERRUPT FLAGS — 2104

ANY FLAGS SET ? — 2105 — YES

NO

END

# FIG.17

START

TRANSMIT S$_{DM}$ — 2201

IS S$_{CD}$ RECEIVED ? — NO → (loop back)
2202

YES

READ V$_A$
2203

STORE V$_A$
2204

RETURN

# FIG.18

START

IS FL$_{DSEB}$ SET ? — 2301
YES → (to left)
NO

IS IGN. KEY PRESENT ? — 2302
YES → (to left)
NO

TRANSMIT S$_{DM}$ — 2303

IS S$_{CD}$ RECEIVED ? — NO → (loop back)
2304
YES

READ OUT PRESET CODE — 2305

DOES UNIQUE CODE MATCH PRESET CODE ? — 2306
NO → (to left)
YES

IS DOOR LOCKED ? — 2307
NO → ACTUATE 242 — 2309
YES

ACTUATE 240 — 2308

RETURN

ACTUATE 242 → GO TO 4TH SUB-ROUTINE

# FIG.19

```
                    ┌─────────┐
                    │  START  │
                    └─────────┘
                         │
                         ▼
YES          ◇ IS IGN. KEY PRESENT ? ◇───── 2401
 │                       │ NO
 │                       ▼
 │            ┌──────────────────┐
 │            │  TRANSMIT Sᴅᴍ     │────── 2402
 │            └──────────────────┘
 │                       │
 │                       ▼
 │            ◇ IS Scᴅ RECEIVED ? ◇──── NO
 │                       │ YES      2403
 │                       ▼
 │            ┌──────────────────┐
 │            │   READ Vʙ         │────── 2404
 │            └──────────────────┘
 │                       │
 │                       ▼
 │            ┌──────────────────┐
 │            │   STORE  Vʙ       │────── 2405
 │            └──────────────────┘
 │                       │          2406
 │                       ▼           NO
 │            ◇ △V > Vref ? ◇─────────────────┐      2407
 │                       │ YES                │
 │                       │            ┌──────────────┐
 │                       │            │   ALARM       │
 │                       │            └──────────────┘
 │                       ▼
 │            ┌──────────────────┐
 │            │  RESTART TIMER    │────── 2408
 │            └──────────────────┘
 │                       │
 │                       ▼
 │            ◇ TIME OVER ? ◇──── NO
 │                       │ YES     2409
 │                       ▼
 │            ┌──────────────────┐
 │            │  TRANSMIT Sᴅʜ     │────── 2410
 │            └──────────────────┘
 │                       │          2411
 │                       ▼
 │── YES      ◇ TIME OVER ? ◇
 │                       │ NO
 │                       ▼
 │            ◇ IS Scᴅ RECEIVED ? ◇──── NO
 │                       │ YES      2412
 │                       ▼
 │            ┌──────────────────┐
 │            │  SET FLᴅsᴇʙ       │────── 2413
 │            └──────────────────┘
 │                       │
 └───────────────────────┤
                         ▼
                    ┌─────────┐
                    │ RETURN  │
                    └─────────┘
```

# FIG.20

# FIG.21

# FIG.23

START

2701 — IS FL DSEB SET ? — YES

NO

2702 — TRANSMIT S DM

2703 — IS S CD RECEIVED ? — NO

YES

STORE V A

READ PRESET CODE

2704 — DOES UNIQUE CODE MATCH PRESET CODE ? — NO

2705

YES

2706 — ACTUATE 238

RETURN

GO TO 3RD SUB-ROUTINE

# FIG.22

START

2601 — ARE ANY DOORS OPEN ? — NO

YES

2602 — IS IGN. KEY PRESENT ? — NO

YES

2603 — UNLOCK DOOR LOCK

RETURN

# FIG.24

START

2801 — SET CORRESPONDING FLAG IN REG 222-2

RETURN